# EUROPÄISCHE PATENTSCHRIFT

(11) **EP 1 381 009 B1**
(45) Veröffentlichungstag und Bekanntmachung des Hinweises auf die Patenterteilung: **14.05.2008**
(21) Anmeldenummer: 03012395.4
(22) Anmeldetag: 30.05.2003
(51) Int. Cl.: G08G 1/0968, G01C 21/34

(54) **Verfahren zur Aktualisierung von Routendaten**
Method for the updating of route data
Méthode d'actualisation des données des routes

(30) Priorität: 12.07.2002 DE 10231833
(43) Veröffentlichungstag der Anmeldung: 14.01.2004
(73) Patentinhaber: ROBERT BOSCH GMBH, 70442 Stuttgart (DE)
(72) Erfinder: Draeger, Gerd, 38102 Braunschweig (DE); Friedrichs, Arne, 38114 Braunschweig (DE)

(56) Entgegenhaltungen:
- EP-A- 1 102 228
- WO-A-01/22035
- DE-A- 19 858 568
- DE-A- 19 859 645
- US-B1- 6 314 360
- EWING T ET AL: "Using a scalable modeling and simulation framework to evaluate the benefits of intelligent transportation systems" PROCEEDINGS OF THE HIGH PERFORMANCE COMPUTING SYMPOSIUM - HPC 2000, PROCEEDINGS OF HIGH PERFORMANCE COMPUTING SYMPOSIUM, WASHINGTON, DC, USA, 16-20 APRIL 2000, Seiten 95-100, XP002276980 2000, San Diego, CA, USA, SCS, USA ISBN: 1-56555-197-4

## Beschreibung

Die Erfindung geht aus von einem Verfahren zur Aktualisierung von Routendaten bei einem Nutzer bzw. dessen Navigationsgerät.

Bekannt sind Offboard-Navigationsgeräte, die Routeninformationen nicht autark berechnen, sondern über eine geeignete Schnittstelle von einem Server anfragen und übertragen.

Weiterhin sind Verfahren, mit denen ein Navigationsendgerät die Routenaktualität in Bezug auf den gegenwärtigen Verkehrszustand überprüfen und gegebenenfalls eine serverseitige Routen-Neuberechnung unter Berücksichtigung von im Navigationsendgerät vorliegenden Verkehrsstörungsmeldungen, z.B. TMC oder manuelle "Stau-Voraus"-Funktion, veranlassen kann.

Desweiteren gibt es infrastrukturgestützte Monitoring-Verfahren, bei denen ein Server jede Route, die er berechnet und an ein beliebiges Navigationsgerät geschickt hat, vorhält und ständig mit dem auf dem Server bekannten aktuellen Verkehrszustand auf Staus überprüft, um dann gegebenenfalls Alternativrouten zu berechnen und an die entsprechenden Navigationsgeräte zu senden.

Aus der DE 19858568 A1 ist eine Einrichtung zur Übertragung von Fahrtroutenempfehlungen mindestens eines Netzes öffentlicher Verkehrsmittel zu einem Empfänger bekannt Im Zuge der Übertragung der Fahrtroutenempfehlungen erfolgt eine Codierung mittels mindestens einer Ortsdatenbank , welche mindestens Teile eines Verkehrsnetzes abbildet.

Aus der EP 1102228 A2 ist ein Verfahren zur Führung eines Benutzers einer Navigationseinheit von einem aktuellen Ort zu einem Zielort benannt. Hierbei empfängt eine Navigationseinheit, welche sich in einem Fahrzeug befindet, eine Fahrtroute zu einem Zielort von einem Informationszentrum mittels Datenkommunikation. Daran anschließend führt die Navigationseinheit eine Routenführung unter Verwendung der übertragenen Daten durch.
Die Navigationseinheit beinhaltet Mittel zur Datenübertragung, um zur Initiierung einer Routenanfrage unterschiedliche Daten zu dem Informationszentrum zu übertragen. Hierbei handelt es sich um Daten betreffend den aktuellen Aufenthaltsort und den Zielort der Navigationseinheit sowie die Identifikationsdaten der in der Navigationseinheit abgespeicherten Straßeninformationen.
Das Informationszentrum besitzt Entscheidungsmittel, um zu entscheiden, ob die entlang einer durch das Informationszentrum vorgeschlagenen Route vorkommenden Daten von Straßenverbindungen in jenen Straßeninformationen abgespeichert sind, welche sich in den Mitteln der Navigabonseinheit zur Abspeicherung von Straßeninformationen befinden. Zur Durchführung dieser Entscheidung vergleicht das Informationszentrum zwei Arten von Daten miteinander: Erstens die Identifikationsdaten, welche von der Navigationseinheit an das Informationszentrum übertragen wurden, und zweitens die Identifikationsdaten der Straßeninformationen, welche in einer Datenbasis des Informationszentrums abgespeichert sind. Bei den Identifikatictnsdaten handelt es sich um Daten, anhand derer die Aktualität der Straßeninformationen, welche in der Navigationseinheit abgespeichert sind, bezogen auf die Straßen informationen, welche in dem Informationszentrum abgespeichert sind, beurteilt werden kann. Bei den Identifikationsdaten handelt es sich nicht um Daten, anhand derer eine Fahrtroute bestimmt werden kann

### Vorteile der Erfindung

Mit den Maßnahmen der Erfindung lässt sich ein Routenaktualisierungs /Routendynamisierungsverfahren realisieren, bei dem die komplexe Auswertung des gegenwärtigen Verkehrszustandes und das Überprüfen von Verkehrsstörungen auf der aktuellen Route eines Nutzers (Client) auf einen Server stattfindet. Der Server, jedoch nicht der Client kennt hierzu die aktuellen Verkehrsmeldungen.

Um eine beim Nutzer vorhandene Route auf Verkehrsstörungen zu überprüfen, wird vom Navigationsgerät nach einem Timeout oder nach einer abgefahrenen Strecke, manueller Anstoß, etc. eine Routendynamisierungsanfrage an den Server geschickt ("Polling").

Das Navigationsendgerät teilt dann dem Server seine augenblickliche Position sowie die ursprünglich berechnete Restroute zum Fahrziel in einer geeigneten, datenreduzierenden Codierung mit. Daraufhin kann der Server entweder die Aktualität der im Navigationsgerät vorliegenden Route bestätigen oder eine Alternativroute berechnen und zurückschicken. Für die Übermittlung der Alternativroute kann dann wiederum eine datenreduzierende Codierung verwendet werden.

Die beschriebene Erfindung nutzt serverseitig vorliegende Verkehrsmeldungen bzw. andere Störungsmeldungen, wie z.B. präferenzierte Routenalternativen als Vorgaben aus Verkehrsmanagementsystemen zur dynamisierten Routenführung bei Offboard-Navigationssystemen derart, dass der Server nicht ständig für jedes Navigationsgerät die zurzeit aktive Route vorhalten und deren Aktualität überprüfen muss.

Nach Erhalt einer Route auf dem Navigationsgerät werden die Routendaten auf dem Server vorteilhafter Weise verworfen, so dass der Server nicht für jeden Nutzer eine berechnete Route für Standort-Prognosen vorhalten muss, wodurch Speicher- und Verwaltungsaufwand gespart werden. Die Routedynamisierung wird erst auf Anfrage vom Navigationsgerät ausgelöst, das heißt das Navigationsgerät initiiert dies entweder automatisch in regelmäßigen Abständen oder explizit durch Benutzerinteraktion, wodurch der Nutzer die durch die notwendige Kommunikation entstehenden Kosten kontrollieren kann. Um nicht auf jede Anfrage eine neu berechnete Route zurückschicken zu müssen, muss der Server entscheiden können, ob sich die Routenführung geändert hat. Hierzu benötigt er die ursprüngliche Route. Das erfindungsgemäße Verfahren ermöglicht es dem Navigationsgerät, dem Server den ursprünglichen Streckenverlauf ohne Übertragung der gesamten Routendaten mitzuteilen. Hierzu werden nur die nach dem beschriebenen Verfahren generierten Stützstellen der Route übermittelt, anhand derer der Server überprüfen kann, ob sich die Streckenführung unter Berücksichtigung der aktuellen Verkehrslage ändert Nur in diesem Fall wird eine komplette Alternativroute berechnet und an das Navigationsgerät zurückgeschickt.

Durch das erfindungsgemäße Verfahren werden also die Kommunikationskosten minimiert.

Weitere Vorteile gegenüber einem Server basierten Monitoring sind die geringeren Ansprüche an einen Server (Speicher, Laufzeitperformance und Verwaltungsaufwand). Weiterhin muss der Server nicht die jeweilige Fahrzeugposition schätzen, was sich besonders bei Alternativrouten enthaltenden Routenkorridoren sehr schwierig gestaltet, sondern bekommt die exakte aktuelle Position vom Navigationsgerät aus mitgeteilt.

### Zeichnungen

Anhand der Zeichnungen werden Ausführungsbeispiele der Erfindung erläutert. Es zeigen
Figur 1 den Dialog zwischen Server und Navigationsgerät bei einer Aktualisierung von Routendaten,
Figur 2 eine vom Server übermittelte Route,
Figur 3 eine Alternativroute nach einer Aktualisierung.

### Beschreibung von Ausführungsbeispielen

Die Offboard-Navigationsroutendaten, die vom Server 2 an das Navigationsgerät 1 übermittelt werden, bestehen typischer Weise aus Punkt- (Koordinaten) und Kanteninformationen (Straßenstücke), wobei zumindest entweder die Punkte oder die Kanten mit eindeutigen Kennungen (IDs) versehen sind, anhand derer sie auf dem Server eindeutig einer digitalen Karte zugeordnet werden können. Weiterhin sind die Kanten mit Attributen wie Straßenname, Straßenklasse, usw. versehen.

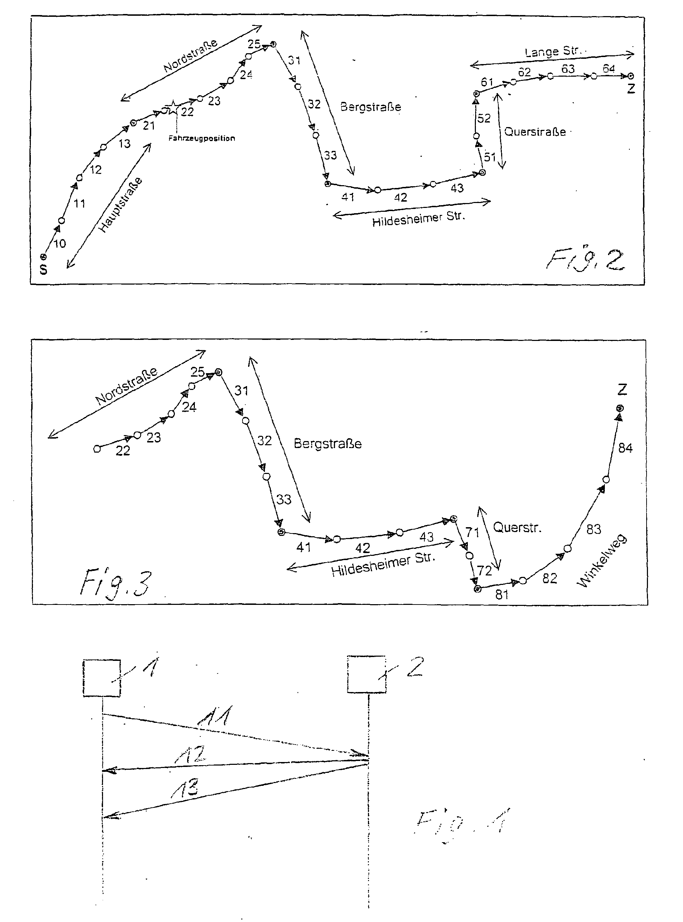

In einer Aktualisierungsanfrage/Routendynamisierungsanfrage 11 gemäß Figur 1 schickt das Navigationsgerät eines Nutzers
- die aktuelle Fahrzeugposition als Kantenerkennung (ID) in den Routendaten,
- die Kennung (ID) des ursprünglichen Fahrziels,
- sowie eine Liste von Kantenkennungen (IDs), die den Routenverlauf zwischen der augenblicklichen aktuellen Position und dem Fahrziel repräsentiert (als Stützstellen), wobei in diese Liste nur diejenigen Kanten aufgenommen werden, an denen sich entlang des Routenverlaufs wichtige Kantenattribute, vorzugsweise der Straßenname, ändern.

Zur Erstellung dieser Liste wird also beginnend von einer aktuellen Kante bis zum Fahrziel entlang der Route jede Kante mit ihrer vorgegebenen Kante verglichen und nur in diese Liste aufgenommen, wenn sich der Straßenname, oder andere bzw. weitere Attribute, von dem der Vorgängerkante unterscheidet.

Der Server 2 wird daraufhin eine Route unter Berücksichtigung der augenblicklichen Verkehrslage berechnen und überprüfen, ob die Liste der vom Navigationsgerät empfangenen "Stützstellen" mit denen der neuen Route übereinstimmt. Ist dies der Fall, wird der Server 2 auf dem Navigationsgerät die Aktualität der ursprünglichen Route bestätigen (12), andernfalls die neue Route aufbereiten und an das Navigationsgerät 1 zurücksenden (13).

Vorteilhafter Weise wird das Navigationsgerät 1 die Liste der Stützstellen nicht für die komplette Route, sondern nur für das folgende Streckenstück als Teil der Restroute zum Fahrziel mit einer bestimmten Länge generieren, um noch nicht relevante Verkehrsstörungen am Ende einer langen Route zu ignorieren. Hierzu fügt das Navigationsgerät zur Dynamisierungsanfrage die Kennung des letzten berücksichtigten Routenelements und/oder einen weiteren charakteristischen Routenparameter wie Fahrzeit t oder Streckenlänge 1 hinzu. Durch dieses Verfahren wird also vermieden, dass häufig noch nicht relevante Daten übertragen werden müssen.

Alternativ können anstatt der Kanten-IDs auch Punktkennungen oder Koordinaten verwendet werden.

Alternativ kann zusätzlich zum Straßennamen oder anstelle dessen auch die Straßenklasse für die Erstellung der Liste überprüft werden.

Um den Speicheraufwand beim Server 2 zu minimieren, kann der Server nach einer abgeschlossenen Routenaktualisierung die Routendaten dieses Nutzers bzw. seines Navigationsgerätes verwerfen, da er keine berechnete Route für Standort-Prognosen vorhalten muss.

Nachfolgend werden zwei konkrete Ausführungsbeispiele nach der Erfindung dargestellt.

Ein Offboard-Navigationsgerät 1 hat die in Figur 2 dargestellte Route von einem Server 2 bekommen. Nachdem der Nutzer einige Zeit auf der Strecke gefahren ist, möchte er vom Server 2 überprüfen lassen, ob auf dem nachfolgenden Streckenverlauf Behinderungen durch Verkehrsstörungen zu erwarten sind und es eventuell günstiger wäre, eine andere Strecke zu fahren. Er wählt am Navigationsgerät 1 die entsprechende Funktion, worauf dieses nach dem erfindungsgemäßen Verfahren ausgehend von der aktuellen Position auf der Route die Stützstellen des Streckenverlaufs als diejenigen Kanten, an denen der Straßenname wechselt, bestimmt.

Für die Aktualisierungsanfrage (Dynamisierungsanfrage) an den Server ergibt sich danach:
Start an Fahrzeugposition 22, Ziel = Z, Stützstellen = [31, 41, 51, 61].

Der Server 2 berechnet daraufhin die beste Route von der Startkante 22 zum Ziel Z unter Berücksichtigung einer zeitweisen Straßensperrung an der Kante 62 auf der "Langen Straße" und ermittelt den in Figur 3 dargestellten günstigsten Streckenverlauf. Da sich die nun vom Server 2 nach dem gleichen Verfahren ermittelten Stützstellen der neuen Route [31, 41, 71, 81] von denen der ursprünglichen Route des Nutzers unterscheiden, schickt der Server 2 die komplette neue Route an das Navigationsgerät 1 zurück, welches daraufhin mit der geänderten Zielführung beginnt.

Ein Offboard-Navigationsgerät ist in einem zweiten Ausführungsbeispiel so konfiguriert, dass es automatisch regelmäßig alle 30 min Aktualisierungsanfragen an den Server 2 sendet, um die Aktualität der aktiven Route sicherzustellen. Das Navigationsgerät 1 befindet sich wie im ersten Beispiel an der Position 22 auf der in Figur 2 dargestellten Route. Da das Navigationsgerät 1 regelmäßig anfragt, benötigt es zu einem frühen Zeitpunkt noch keine Informationen zu zielnahen Verkehrsstörungen auf der Route. Es bestimmt daher die Stützstellen nur auf einer Streckenlänge, die einer Fahrtzeit von einer Stunde entspricht, beispielsweise von Kante 22 bis 42.

Für die Dynamisierungsanfrage an der Server ergibt sich dann:
Start an Fahrzeugposition 22, Ziel = Z, letzte berücksichtigte Kante = 42, Stützstellen = [31, 41].

Der Server 2 berechnet daraufhin wie im ersten Beispiel die Route in Figur 3. Die Stützstellen werden nun allerdings nur bis zur Kante 42 bestimmt, es wird dieselbe Liste [31, 41] wie im Navigationsgerät 1 ermittelt. Der Server 2 wird also dem Navigationsgerät 1 die Aktualität der Route bezogen auf den betrachteten Streckenabschnitt bestätigen und keine neue Route schicken.

Zu einem späteren Zeitpunkt befindet sich das Fahrzeug an der Kante 33 und sendet eine erneute Aktualisierungsanfrage:
Start an der Fahrzeugposition 33, Ziel = Z, letzte berücksichtigte Kante = 62, Stützstellen = [41,51,61].

Da die Streckensperrung mittlerweile aufgehoben ist, ermittelt der Server 2 die beste Route von Kante 33 zum Ziel, die wieder dem ursprünglichen Streckenverlauf entspricht. Als Stützstellen ergeben sich wieder [41, 51, 61], es ist also erneut keine Aktualisierung der Route erforderlich.

## Patentansprüche

1. Verfahren zur Aktualisierung von Routendaten bei einem Nutzer bzw. dessen Navigationsgerät (1) mit folgenden Schritten:
- Das Navigationsgerät (1) sendet mindestens eine Aktualisierungsanfrage (11) an einen Server (2), wobei es dem Server (2) eine aktuelle Position und mindestens einen Teil einer Restroute zu einem Fahrziel übermittelt, indem zur Übermittlung des Teils der Restroute Stützstellen des Routenverlaufs verwendet werden, wobei die Aktualisierungsanfrage (11) an den Server (2) in regelmäßigen Abständen automatisch abgesetzt wird,
- Der Server (2) überprüft den vom Navigationsgerät (1) übermittelten Teil der Restroute auf ihm bekannte Störungen hin und überprüft anhand der Stützstellen der Restroute und unter Berücksichtigung einer aktuellen Verkehrslage, ob sich eine Streckenführung ändert, wobei nur bei einer Änderung eine komplette Alternativroute berechnet und an das Navigationsgerät (1)zurückgeschickt wird, andernfalls bestätigt der Server (2) die Aktualität der ursprünglichen Restroute (1).

2. Verfahren nach Anspruch 1, **dadurch gekennzeichnet, dass** die in einer Aktualisierungsanfrage (11) vom Navigationsgerät (1) zum Server (2) übertragenen Daten einer datenreduzierenden Codierung unterzogen werden.

3. Verfahren nach einem der Ansprüche 1 oder 2, **dadurch gekennzeichnet, dass** die vom Server (2) vorgeschlagene Alternativroute (13) für die Übertragung zum Navigationsgerät (1) einer datenreduzierenden Codierung unterzogen wird.

4. Verfahren nach einem der Ansprüche 1 bis 3, **dadurch gekennzeichnet, dass** in einer Aktualisierungsanfrage die aktuelle Position als Kantenkennung, die Kennung des Fahrzieles sowie eine Liste von Kantenkennungen, die den Routenverlauf zwischen der aktuellen Position und dem Fahrziel repräsentieren, übertragen werden.

5. Verfahren nach Anspruch 4, **dadurch gekennzeichnet, dass** in die Liste von Kantenkennungen nur jene Kanten aufgenommen werden, an denen sich entlang des Routenverlaufs wichtige Kantenattribute ändern.

6. Verfahren nach einem der Ansprüche 1 bis 5, **dadurch gekennzeichnet, dass** bei der Übermittlung des Teils der Restroute eine Kennung des letzten berücksichtigten Routenelements und/oder eines weiteren routencharakteristischen Parameters übertragen wird.

7. Verfahren nach einem der Ansprüche 3 bis 6, **dadurch gekennzeichnet, dass** in einer Aktualisierungsanfrage die aktuelle Position als Punktekennung oder Koordinaten, die Kennung des Fahrzieles/Zwischenzieles sowie eine Liste von Punktekennungen oder Koordinaten, die den Routenverlauf zwischen der aktuellen Position und dem FahrzlevZwischenziel repräsentieren, übertragen werden.

8. Verfahren nach einem der Ansprüche 4 bis 7, **dadurch gekennzeichnet, dass** für die Erstellung der Liste der Kantenkennungen bzw. Punktekennungen oder Koordinaten der Straßenname und/oder die Straßenklasse geprüft wird.

9. Verfahren nach einem der Ansprüche 1 bis 8, **dadurch gekennzeichnet, dass** nach einer abgeschlossenen Routenaktualisierung von Routendaten die Routendaten auf dem Server verworfen werden, derart, dass der Server nicht für jeden Nutzer eine berechnete Route für Standort-Prognosen vorhalten muss.

## Claims

1. Method for updating route data at a user or the user's navigation device (1) having the following steps:
- the navigation device (1) transmits at least one update request (11) to a server (2), wherein it transmits a current position and at least part of a remaining route to a destination to the server (2) in that reference points on the profile of the route are used to transmit the part of the remaining route, wherein the update request (11) is output automatically to the server (2) at regular intervals,
- the server (2) checks the part of the remaining route which has been transmitted by the navigation device (1) for disruption which is known to it and by referring to the reference points on the remaining route and taking into account a current traffic situation it checks whether a course of the route changes, wherein a complete alternative route is calculated and sent back to the navigation device (1) only if there is a change, and otherwise the server (2) confirms the up-to-dateness of the original remaining route (1).

2. Method according to Claim 1, **characterized in that** the data which is transmitted in an update request (11) from the navigation device (1) to the server (2) is subjected to data-reducing encoding.

3. Method according to one of Claims 1 or 2, **characterized in that** the alternative route (13) which is proposed by the server (2) for transmission to the navigation device (1) is subjected to data-reducing encoding.

4. Method according to one of Claims 1 to 3, **characterized in that** the current position as an edge identifier, the identifier of the destination and a list of edge identifiers which represent the profile of the route between the current position and the destination are transmitted in an update request.

5. Method according to Claim 4, **characterized in that** only edges at which important edge attributes along the profile of the route change are included in the list of edge identifiers.

6. Method according to one of Claims 1 to 5, **characterized in that** during the transmission of the part of the remaining route an identifier of the last route element taken into account and/or of a further parameter which is characteristic of the route are transmitted.

7. Method according to one of Claims 3 to 6, **characterized in that** the current position is transmitted in an update request as a point identifier or as coordinates, and the identifier of the destination/intermediate destination and a list of point identifiers or coordinates which represent the profile of the route between the current position and the destination/intermediate destination are transmitted in an update request.

8. Method according to one of Claims 4 to 7, **characterized in that** the street name and/or class of road are checked for the creation of the list of edge identifiers or point identifiers or coordinates.

9. Method according to one of Claims 1 to 8, **characterized in that** after a route update of route data has been concluded, the route data on the server is discarded in such a way that the server does not have to store a calculated route for location forecasts for every user.

## Revendications

1. Procédé d'actualisation des données routières chez un utilisateur ou dans son appareil de navigation (1) comprenant les étapes suivantes :
- l'appareil de navigation (1) envoie au moins une requête d'actualisation (11) à un serveur (2), en transmettant au serveur (2) la position actuelle et au moins une partie d'un trajet restant jusqu'à la destination, en ce que pour transmettre la partie du trajet restant on utilise des points d'appui du tracé du trajet, la requête d'actualisation (11) étant déposée automatiquement chez le serveur (2) à des intervalles réguliers,
- le serveur (2) vérifie la partie du trajet restant transmise par l'appareil de navigation (1) vis-à-vis de perturbations qu'il connaît et à l'aide des points d'appui du trajet restant et en tenant compte d'une situation de circulation actuelle, il vérifie si le guidage du trajet a changé et ce n'est qu'en cas de changement qu'il calcule un trajet alternatif complet et le renvoie à l'appareil de navigation (1) et dans le cas contraire le serveur (2) confirme l'actualité du trajet restant d'origine (1).

2. Procédé selon la revendication 1,
**caractérisé en ce que**
les données transmises par l'appareil de navigation (1) au serveur (2) au cours d'une requête d'actualisation (11) sont soumises à un codage réduisant les données.

3. Procédé selon l'une des revendications 1 ou 2,
**caractérisé en ce que**
le trajet alternatif (13) proposé par le serveur (2) pour la transmission à l'appareil de navigation (1) est soumis à un codage réducteur de données.

4. Procédé selon l'une des revendications 1 à 3,
**caractérisé en ce que**
dans une requête d'actualisation, on transmet la position actuelle comme reconnaissance de segment, la caractéristique de la destination ainsi qu'une liste de reconnaissance de segment représentant le tracé du trajet entre la position actuelle et la destination.

5. Procédé selon la revendication 4,
**caractérisé en ce que**
dans la liste des caractéristiques de segment, on ne prend que celles pour lesquelles des attributs de segments importants changent le long du tracé du trajet.

6. Procédé selon l'une des revendications 1 à 5,
**caractérisé en ce que**
lors de la transmission de la partie du trajet restant on transmet une caractéristique du dernier élément de trajet prise en compte et/ou d'un autre paramètre caractéristique du trajet.

7. Procédé selon l'une des revendications 3 à 6,
**caractérisé en ce que**
dans une requête d'actualisation on transmet la position actuelle comme reconnaissance ponctuelle ou comme coordonnées, la caractéristique de la destination ou de destinations intermédiaires ainsi qu'une liste de points caractéristiques ou de coordonnées représentant le tracé du trajet entre la position actuelle et la destination/une destination intermédiaire.

8. Procédé selon l'une des revendications 4 à 7,
**caractérisé en ce que**
pour établir la liste des caractéristiques de segments ou des caractéristiques de points ou des coordonnées on vérifie les noms des rues et/ou la classe des rues.

9. Procédé selon l'une des revendications 1 à 8,
**caractérisé en ce qu'**
après une actualisation terminée du trajet pour les données de trajet, on rejette les données de trajet du serveur de façon que le serveur n'ait pas à réserver pour chaque utilisateur un trajet calculé pour des pronostics d'emplacement.
